Europäisches Patentamt

European Patent Office

Office européen des brevets

(11) Veröffentlichungsnummer: **0 161 431**
**A1**

## (12) EUROPÄISCHE PATENTANMELDUNG

(21) Anmeldenummer: 85103410.8

(22) Anmeldetag: 22.03.85

(51) Int. Cl.⁴: **F 16 H 19/06**

(30) Priorität: 15.05.84 DE 3418064

(43) Veröffentlichungstag der Anmeldung: 21.11.85
**Patentblatt 85/47**

(84) Benannte Vertragsstaaten: **AT BE CH DE FR GB IT LI LU NL SE**

(71) Anmelder: **Siemens Aktiengesellschaft, Berlin und München Wittelsbacherplatz 2, D-8000 München 2 (DE)**

(72) Erfinder: **Lehne, Dietmar, Dormitzer Strasse 8, D-8524 Neunkirchen a. Brand (DE)**

(54) **Reversierbares Getriebe.**

(57) Bei einem Getriebe zum Umsetzen von Drehbewegungen in lineare Bewegungen mit einem endlosen Treibriemen (4), der über mehrere Umlenkrollen (6, 8) geführt ist, von denen einige (6) ortsfest in einem Gehäuse und die anderen (8) am ortsbeweglichen Abtrieb angeordnet sind, ist vorgesehen, die Trume des Treibriemens zwischen den gehäuseseitigen und den abtriebsseitigen Umlenkrollen (6, 8) parallel zueinander und zur auszuführenden linearen Bewegung laufen zu lassen. Bei einem solchen Getriebe bleibt die Spannung des Treibriemens nahezu konstant. Das Getriebe kann z. B. mit Vorteil zum Steuern von Schrankenbäumen verwendet werden.

Siemens Aktiengesellschaft
Berlin und München

Unser Zeichen
VPA **84 P 2913 E**

## Reversierbares Getriebe

Die Erfindung bezieht sich auf ein reversierbares Getriebe nach dem Oberbegriff des Patentanspruches 1.

Reversierbare Getriebe zum Umsetzen von Drehbewegungen in lineare Bewegungen werden z.B. im Eisenbahnwesen zur Weichen- und Schrankenbaumsteuerung benötigt. Diese Getriebe sind üblicherweise als Zahnstangentriebe in Verbindung mit Räder- und Schneckengetrieben, als Spindel-, Gewindespindel- oder Kugelgewindetriebe oder auch Hydraulik- und Pneumatiksysteme mit Pumpe bzw. Verdichter und Hubzylinder ausgebildet. Diese Getriebe sind allesamt relativ aufwendig, weil sie zur Erzielung eines hohen Übersetzungsverhältnisses entweder mit mehreren Getriebestufen arbeiten oder aber spezielle, aufwendig hergestellte Bauelemente benötigen und weil sie mindestens zum Teil auch einen schlechten Wirkungsgrad aufweisen und eine regelmäßige Wartung erfordern.

Aus der GB-PS 14 79 281 ist ein Getriebe nach dem Oberbegriff des Patentanspruches 1 bekannt, das bei hoher Übersetzung mit nur einer einzigen Getriebestufe auskommt und sich durch einen übersichtlichen, unkomplizierten Aufbau aus bewährten handelsüblichen Maschinenelementen und durch einen guten Wirkungsgrad auszeichnet. Dieses Getriebe weist einen in Führungen linear beweglich gelagerten Abtriebselement mit zwei beweglichen Umlenkrollen auf. Über diese Umlenkrollen läuft ein endloser Zahnriemen. Die zu den Umlenkrollen laufenden Trume des Zahnriemens werden von einem rotorischen Antrieb jeweils mit unterschiedlichen Geschwindigkeiten

Gi-6-Jas / 25.02.85

und in unterschiedlichen Richtungen angetrieben. Dies geschieht durch an den Trumen des Zahnriemens angreifende Zahnräder mit unterschiedlichen Zahnzahlen, die gemeinsam angetrieben werden. Auf Grund der unterschiedlichen Umfangsgeschwindigkeiten der Zahnräder bewegt sich das Abtriebselement jeweils mit der halben Differenzgeschwindigkeit der Trume in seinen Führungen entweder in die eine oder in die andere Richtung.

Um Schlupf zwischen den antreibenden Zahnrädern und dem Zahnriemen zu vermeiden, ist es erforderlich, den Zahnriemen so zu führen, daß er die Zahnräder mit einem möglichst großen Winkel umschließt. Dies läßt sich durch Verwendung von Umlenkrollen erreichen. Bei dem aus der GB-PS bekannten Getriebe sind die Antriebszahnräder selbst in vorteilhafter Weise als Umlenkrollen für den Zahnriemen ausgebildet und angeordnet.

Das bekannte Getriebe weist jedoch den Nachteil auf, daß sich während des Betriebes laufend die Zahnriemenspannung ändert. Diese Zahnriemenspannungsänderungen sind durch zusätzliche Spannelemente für den Zahnriemen aufzufangen.

Aufgabe der Erfindung ist es, ein Getriebe der im Oberbegriff des Patentanspruches 1 angegebenen Art zu schaffen, bei dem während des Betriebes keine Zahnriemenspannungsänderungen auftreten und das deshalb ohne Spannelemente für den laufenden Ausgleich von Spannungsänderungen auskommt.

Bei der Lösung dieser Aufgabe geht die Erfindung von der Erkenntnis aus, daß die betrieblich auftretenden Zahnriemenspannungsänderungen bei dem bekannten Getriebe dadurch bedingt sind, daß der Zahnriemen die beiden abtriebsseitigen Umlenkrollen in Abtriebsrichtung jeweils verschieden schnell zu bewegen sucht. Da der Abstand der abtriebsseitigen Umlenkrollen zueinander und die Länge des Zahnriemens aber konstant sind, kommt es zu unterschiedlichen Zug- und Druckbeanspruchungen des Zahnriemens, die zum Durchrutschen und im äußersten Fall zum Abspringen des Zahnriemens vom Antrieb führen können. Der Grund für dieses Verhalten des bekannten Antriebs wurde darin erkannt, daß die durch den Zahnriemen auf die einzelnen abtriebsseitigen Umlenkrollen übertragenen Förderhübe nicht allein durch die Differenzgeschwindigkeit der antreibenden Trume bestimmt sind, sondern sich nach einer Winkelfunktion ändern, wobei der jeweilige Winkel durch die gegenläufige Schrägstellung der Trume bestimmt wird, die sich laufend ändert.

Die Erfindung löst die ihr zugrundeliegende Aufgabe dadurch, daß bei einem nach dem Oberbegriff des Patentanspruches 1 ausgebildeten Getriebe die abtriebsseitigen Umlenkrollen und die weiteren Umlenkrollen so angeordnet sind, daß die Trume im Bereich zwischen ihnen jeweils parallel zueinander und parallel zur auszuführenden linearen Bewegung des Abtriebs laufen.

Vorteilhafte Ausbildungen des erfindungsgemäßen Getriebes sind in den Unteransprüchen angegeben.

Die Erfindung ist nachstehend anhand von in der Zeichnung schematisch dargestellten Ausführungsbeispielen näher erläutert. Diese Ausführungsbeispiele beziehen sich auf ein Getriebe zum Umsetzen von Drehbewegungen in lineare Bewegungen; sie unterscheiden sich durch unterschiedliche Ausgestaltungen auf der Antriebsseite.

Angetrieben werden die Getriebe durch nicht dargestellte reversierbare Elektromotoren, die über ein Vorgelege 1 auf zwei Antriebsscheiben 2 und 3 wirken. Das
Vorgelege ist dabei vorzugsweise als Zahnriementrieb
ausgebildet. Die Antriebsscheiben dienen zum Antrieb
eines Treibriemens 4, über den ein abtriebsseitiger
Schieber 5 abhängig von der Drehrichtung des Antriebs
nach oben oder nach unten zu bewegen ist. Der Treibriemen 4 ist dabei über ortsfeste Umlenkrollen 6 in
einem Träger 7 für die Aufnahme des Vorgeleges und die
Führung des Schiebers sowie über Umlenkrollen 8 am
Schieber 5 geführt; er ist ebenfalls vorzugsweise als
Zahnriemen ausgebildet.

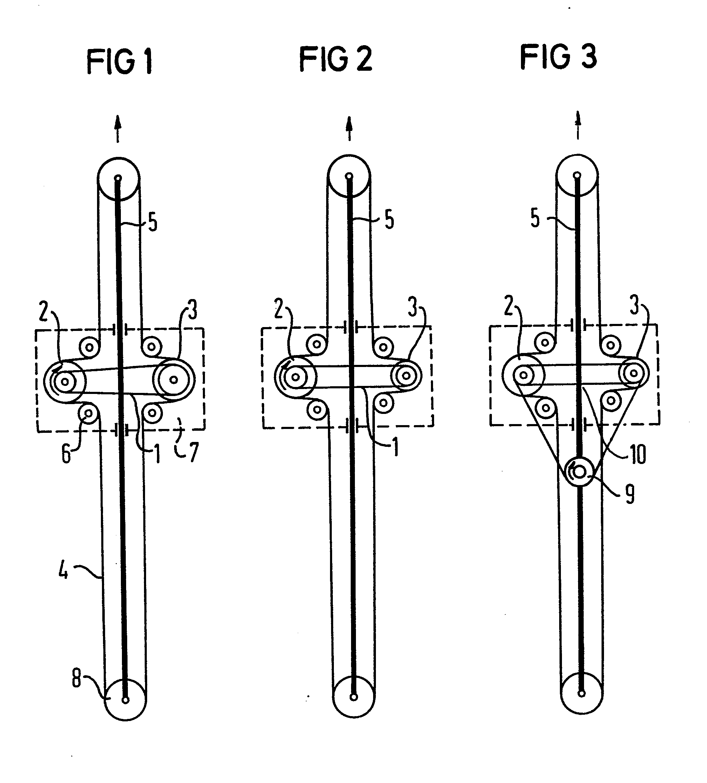

Bei dem in Figur 1 dargestellten Ausführungsbeispiel
sind gleichgroße Antriebsscheiben 2 und 3 vorgesehen,
das heißt, beide Scheiben sind mit einer gleichgroßen
Anzahl von Zähnen versehen. Durch das zugehörige Vorgelege werden die beiden Antriebsscheiben mit unterschiedlicher Geschwindigkeit angetrieben; dabei ergibt sich
für die Antriebsscheibe 2 eine höhere Fördergeschwindigkeit als für die Antriebsscheibe 3. Die Folge davon ist,
daß das in der Zeichnung links des Schiebers 5 verlaufende Trum des Treibriemens 4 schneller läuft als das
rechtslaufende Trum. Dabei werden über das auf der rechten Seite des Schiebers vom Vorgelege zur unteren Umlenkrolle laufende Trum Zugkräfte auf den Schieber ausgeübt. Dies führt dazu, daß der Schieber 5 in Pfeilrichtung bewegt wird und zwar mit der halben Differenzgeschwindigkeit, mit der sich die beiden Trume gegenläufig bewegen.

Die hin- und herlaufenden Trume des Treibriemens 4 sind
über die Umlenkrollen 6 so geführt, daß sie jeweils parallel zum Schieber 5 laufen. Hierdurch wird erfindungsgemäß vermieden, daß der Treibriemen die abtriebsseitigen Umlenkrollen verschiedenschnell zu verschieben sucht.

Für den ordnungsgerechten Betrieb des Getriebes ist es erforderlich, daß der umlaufende Treibriemen stets gespannt ist. Um durch Alterungslängungen oder unterschiedliche Umgebungstemperaturen gegebene Längungen beim Einsatz des Getriebes an unterschiedlich warmen Orten ausgleichen zu können, können, sofern erforderlich, in der Zeichnung nicht dargestellte Spannräder oder ähnliches verwendet werden. Für die Montage des Getriebes ist es von Vorteil, mindestens eine der Umlenkrollen einstellbar festzulegen; dies kann beispielsweise mittels eines Exzenters geschehen. Die Festlegung dieser Umlenkrolle erfolgt nach dem Auflegen des Treibriemens auf die Umlenkrollen und dem Spannen des Treibriemens bzw. beim Spannen des Treibriemens. Über diese einstellbare Umlenkrolle lassen sich auch die vorerwähnten Einstellungen vornehmen.

Für die Unterbringung des Getriebes auf möglichst engem Raum kann es von Vorteil sein, wenn man das die Antriebsscheiben antreibende Vorgelege auf der einen und die Antriebsscheiben selbst zusammen mit den Umlenkrollen und dem Treibriemen auf der anderen Seite des Trägers 7 für den Antrieb und den Abtrieb anordnet. Man kommt so zu einer raumsparenden Ausführung des Getriebes mit zentral angeordnetem Antriebsmotor, wie es für viele Anwendungszwecke wünschenswert ist. In der Zeichnung würde dann der Treibriemen zusammen mit den Umlenkrollen z.B. vor dem abtriebsseitigen Schieber und das Vorgelege hinter dem Schieber liegen.

Das in Figur 2 dargestellte Getriebe unterscheidet sich von dem Getriebe in Figur 1 dadurch, daß die Antriebsscheiben 2 und 3 unterschiedliche Durchmesser haben. Sie

0161431

werden über ein Vorgelege 1 mit gleicher Drehzahl betrieben, wodurch die Umfangsgeschwindigkeit an der Antriebsscheibe 2 größer wird als die Umfangsgeschwindigkeit an der Antriebsscheibe 3. Die Folge hiervon ist wiederum, daß sich der Schieber 5 in Pfeilrichtung bewegt.

Die Abschaltung des Antriebs kann beispielsweise über Endschalter erfolgen, die in der Zeichnung nicht dargestellt sind. Zum Reversieren des Antriebs ist die Drehrichtung des treibenden Elektromotors umzuschalten. Der Schieber 5 bewegt sich dann entgegen der angedeuteten Pfeilrichtung.

Das in Figur 3 dargestellte Ausführungsbeispiel unterscheidet sich von dem Ausführungsbeispiel der Figur 2 lediglich dadurch, daß der Antrieb des Getriebes über eine gesonderte Antriebsscheibe 9 mit ortsfester Antriebswelle erfolgt. Diese Anordnung hat den besonderen Vorteil, daß der Antriebsmotor im oder am Träger dort angeordnet werden kann, wo genügend Platz vorhanden ist. Da der Umschlingungswinkel des Zahnriemens für das Vorgelege bei dieser Anordnung kleiner ist als bei den Ausführungen nach Figur 1 und 2, kann es von Vorteil sein, die beiden Vorgelegescheiben über einen zusätzlichen Zahnriemen 10 miteinander zu koppeln. Diese Ausbildung gestattet eine gute Kraftübertragung vom Antrieb auf die beiden Antriebsscheiben 2 und 3.

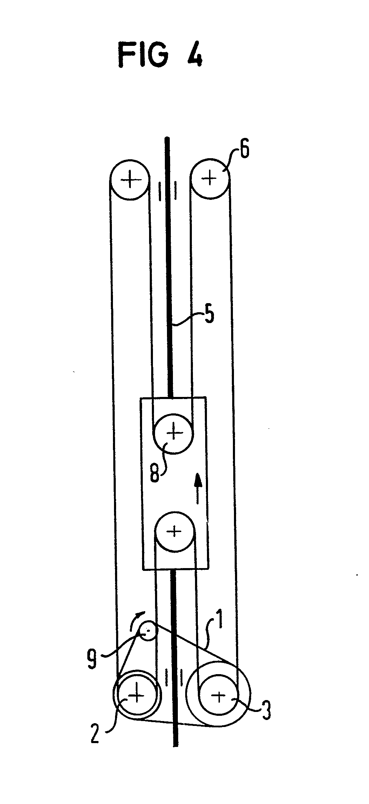

In Figur 4 ist ein Ausführungsbeispiel der Erfindung dargestellt, bei dem der treibende Zahnriemen, ähnlich dem aus der GB-PS bekannten Getriebe, Schlaufen bildet und über nur wenige Umlenkrollen läuft. Die abtriebsseitigen Umlenkrollen 8 sind dabei an einem Abtriebsblock gelagert, der entweder über einen Schieber 5 oder direkt in Längsführungen verschiebbar gelagert ist.
Auch bei dieser Ausführungsform der Erfindung bleibt
die Zugspannung innerhalb des Zahnriemens konstant.

Bei den dargestellten Ausführungsbeispielen ist angenommen, daß die Antriebsscheiben entweder gleichgroß
und mit unterschiedlichen Drehzahlen angetrieben werden oder daß sie mit gleicher Drehzahl angetrieben werden, aber unterschiedlich groß sind. Die Anordnung kann
jedoch auch so getroffen werden, daß die beiden Antriebsscheiben unterschiedlich groß und mit unterschiedlicher Geschwindigkeit angetrieben werden. Wichtig ist,
daß sie mit unterschiedlichen Umfangsgeschwindigkeiten
auf den Treibriemen wirken. Das Abtriebselement selbst
kann von beliebiger Gestalt sein. Es kann beispielsweise auf einer oder auf beiden Seiten mit Auslegern versehen sein, über die der Treibriemen geführt ist. Es
kann auch als verschiebbarer Zylinder ausgebildet sein,
der das Getriebe nach außen hin abdeckt. Das Abtriebselement kann auch mit mehreren Umlenkrollen versehen
sein, über die die Trume jeweils parallel zueinander
und zur linearen Bewegungsrichtung zu führen sind. Anstelle eines Zahnriemens für den Antrieb des Vorgeleges
können auch andere zwangsgeführte Antriebsmittel verwendet sein. So kann der Antrieb z.B. über ein mit den
Vorgelegescheiben in Verbindung stehendes Zahnrad erfolgen, das auf eine Antriebswelle aufgesetzt ist bzw.
zwischen die Vorgelegescheiben geschaltet ist.

Ein besonderer Vorteil des erfindungsgemäßen Getriebes
ist darin zu sehen, daß es sich außerhalb der eigentlichen Beanspruchungszeiten selbsttätig entlastet, das
heißt, in einen nahezu lastfreien Zustand übergeht,
ohne daß es hierzu einer gesonderten Kupplung o.ä. bedarf. Ist nämlich beispielsweise der Schieber unter Last in eine Endstellung gelangt, in der ein von ihm gesteuertes Element, z.B. ein Schrankenbaum, verriegelt wurde, so reversiert das Getriebe beim Abschalten des Antriebes selbsttätig und der unter Last stehende Schieber wirkt solange auf die Antriebsscheiben, bis sich ein Gleichgewicht zwischen Treibriemenzugkraft und Festhaltekraft der Antriebsscheiben eingestellt hat.

8 Patentansprüche
4 Figuren

0161431

VPA 84 P 2913 E

## Patentansprüche

1. Reversierbares Getriebe zum Umsetzen von Drehbewegungen in lineare Bewegungen, unter Verwendung eines in Führungen axial verschiebbar gelagerten Abtriebs mit Umlenkrollen für einen zwangsgeführten endlosen Treibriemen, der jeweils im Hin- bzw. Rücklauf über weitere Umlenkrollen und je eine von zwei gemeinsam angetriebenen gezahnten Antriebsscheiben läuft, welche die jeweils zur gleichen Schieberumlenkrolle laufenden beiden Trume des Treibriemens mit unterschiedlichen Umfangsgeschwindigkeiten und in unterschiedlichen Richtungen antreiben, d a d u r c h   g e k e n n z e i c h n e t , daß die abtriebsseitigen Umlenkrollen (8) und die weiteren Umlenkrollen (6) so angeordnet sind, daß die Trume des Treibriemens (4) im Bereich zwischen ihnen (6, 8) jeweils parallel zueinander und parallel zur auszuführenden linearen Bewegung des Abtriebs laufen.

2. Getriebe nach Anspruch 1, d a d u r c h   g e k e n n z e i c h n e t , daß die beiden Antriebsscheiben (2 und 3 in Figur 1) gleichgroß ausgeführt sind und daß zu ihrem Antrieb ein Vorgelege (1) mit einem Übersetzungsverhältnis ≠ 1 vorgesehen ist.

3. Getriebe nach Anspruch 1, d a d u r c h   g e k e n n z e i c h n e t , daß die beiden Antriebsscheiben (2 und 3 in Figur 2) verschiedengroß ausgeführt sind und daß zu ihrem Antrieb ein Vorgelege (1) mit einem Übersetzungsverhältnis vorgesehen ist, daß verschieden ist vom Verhältnis der Durchmesser der beiden Antriebsscheiben zueinander.

4. Getriebe nach Anspruch 3, d a d u r c h   g e k e n n-
z e i c h n e t ,  daß das Vorgelege das Übersetzungsverhältnis 1 aufweist.

5. Getriebe nach den Ansprüchen 1, 2 oder 3, d a -
d u r c h   g e k e n n z e i c h n e t ,  daß das Vorgelege als Zahnradantrieb ausgebildet ist.

6. Getriebe nach den Ansprüchen 1, 2 oder 3, d a -
d u r c h   g e k e n n z e i c h n e t ,  daß das Vorgelege als Zahnriementrieb ausgebildet ist.

7. Getriebe nach Anspruch 1, d a d u r c h   g e -
k e n n z e i c h n e t ,  daß mindestens eine der Umlenkrollen (6, 8) zum Spannen des Zahnriemens (4) einstellbar festzulegen ist.

8. Getriebe nach mindestens einem der Ansprüche 1 bis 7,
d a d u r c h   g e k e n n z e i c h n e t ,  daß das
Vorgelege (1) einerseits und die Antriebsscheiben (2, 3)
zusammen mit den Umlenkrollen (6, 8) und dem Treibriemen (4) andererseits vor bzw. hinter dem Schieber (5)
angeordnet sind.

FIG 1       FIG 2       FIG 3

FIG 4

Europäisches
Patentamt

**EUROPÄISCHER RECHERCHENBERICHT**

0161431
Nummer der Anmeldung

EP 85 10 3410

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X,D | GB-A-1 479 281 (G.W. FLOYD) <br> * Insgesamt * | 1-3,5 | F 16 H 19/06 |
| | --- | | |
| A | FR-A-2 382 630 (ACIERS ET OUTILLAGE PEUGEOT) <br> * Seite 2, Zeilen 2-37; Figuren 1-6 * | 1,4,8 | |
| | --- | | |
| A | GB-A-1 088 858 (LUWA AG) <br> * Seite 2, Zeilen 73-117; Figuren 1-8 * | 1,4,8 | |
| | --- | | |
| A | US-A-2 571 427 (M.J. DRACHMAN) <br> * Figuren 1-3 * | 1,7 | |
| | --- | | |
| A | US-A-2 859 629 (L. PARKER) | | RECHERCHIERTE SACHGEBIETE (Int. Cl.4) |
| | ----- | | F 16 H |

Der vorliegende Recherchenbericht wurde für alle Patentansprüche erstellt.

| Recherchenort <br> DEN HAAG | Abschlußdatum der Recherche <br> 08-05-1985 | Prüfer <br> VOGT-SCHILB G.J.F. |
|---|---|---|